# EUROPEAN PATENT SPECIFICATION

(11) **EP 2 804 703 B1**
(45) Date of publication and mention of the grant of the patent: **25.07.2018**
(21) Application number: 13702092.1
(22) Date of filing: 18.01.2013
(51) Int. Cl.: B09B 3/00, B09B 5/00

(54) **PROCESS AND METHOD FOR THE TREATMENT OF MATERIALS, MATERIALS THUS OBTAINED AND USES OF THESE MATERIALS.**
VERFAHREN ZUR BEHANDLUNG VON MATERIALE, MATERIALE UND BENUTZUNGEN DIESER MATERIALE.
PROCÉDÉ ET MÉTHODE POUR LE TRAITEMENT DE MATÉRIAUX, MATÉRIAUX AINSI OBTENUS ET UTILISATIONS DE CES MATÉRIAUX.

(30) Priority: 19.01.2012 GB 201200877; 15.02.2012 GB 201202621
(43) Date of publication of application: 26.11.2014
(73) Proprietor: Power Minerals Limited, Sutton Coldfield Birmingham West Midlands B72 1QY (GB)
(72) Inventor: DRURY, Les, Brigg North Lincolnshire DN20 0WA (GB); GAY, Mike, Brigg North Lincolnshire DN20 0WA (GB); CARSON, John William, Burton on Trent DE13 0RH (GB)
(74) Representative: Schlich, George
(86) International application number: PCT/GB2013/050115
(87) International publication number: WO 2013/108041

(56) References cited:
- FR-A1- 2 811 232
- JP-A- H1 017 877
- JP-A- 2008 279 552

## Description

The present invention relates to processes for the treatment of contaminated material and to products obtained by such processes and to their use as fertilizer.

It is a known problem that materials may contain contaminants such as toxic components which reduce the usefulness of those materials and/or pose an environmental and/or health hazard. There is thus a desire to treat contaminated materials to remove contaminants and/or render the materials safe and/or useful.

There are toxic substances that may be present in wood burning and bio-mass power station ash, co-combusted ash, cement kiln dust/fines, lime kiln dust/fines, urban (or municipal) waste incinerator ashes, calcined food waste, calcined animal wastes and calcined sewage sludge, paper ash, refuse derived fuel ash (RDF), specified recovered fuel ash (SRF) which may be derived from a single principle material being calcined, co-combustion of combinations of principle materials, contaminants therein or from the fuel used to power the calcination process. Digestates e.g. anaerobic, aerobic, enzymic, chemical and hydrolytic digestates arising from agricultural, human food waste, industrial wastes and municipal wastes as well as animal residues, animal processing residues or these materials in their own right, may also contain wide ranges of organic pollutants which can be deleterious if such materials are applied to agricultural farmland, which is current practice in many advanced nations.

As a consequence of the presence of organic pollutants and or toxic substances contained in the contaminated materials, their usefulness to mankind is becoming increasingly limited. Arisings of the ashes from calcination processes have to be land-filled or even in some cases much more expensive methods such as bunding has to be used resulting in costly disposal. With digestates, slurries and the like as described above there are concerns that land application could cause crop and or farm animal contamination. For this reason many advanced countries have introduced strict limits on the land application of such materials, while other countries have banned the application of some sewage-derived slurries to cropped land; much of this being driven by legislation.

Many of these expensive toxic ash disposal systems, such as bunded landfill, have been extensively studied with a view to cost reduction. However, to date no satisfactory cheaper method has been found. Moreover, there is concern that even the current expensive disposal systems constitute a residual ground contamination future threat. Certainly, there is evidence of leaching of toxic substances from old land-fill sites containing such toxic ashes.

With digestates, slurries and residues there remains considerable commercial interest in utilising these materials because of their nitrogen, phosphate and potash content. These materials may be concentrated via various water removal techniques and in their concentrated form they resemble water soluble agricultural fertilisers and/or growth promoters which can be made available at a fraction of the cost of such synthetic chemical analogues. However again with some of these materials there are issues and limitations on their application to the land due to toxic materials they contain thus their current usefulness is limited.

Japanese Patent Application 2005/058974 describes a method for removing dioxins from incineration ashes. The process involves first treating the ashes with an acid (such as sulfuric or phosphoric acid) and then treating this mixture with propan-2-ol in an alkaline environment with a hydrogen activation catalyst (such as palladium) in order to chemically reduce the dioxins. The incineration ash is mixed with the acid for 3 hours before the addition of the reducing agents. The mixture is then subjected to the reduction conditions for 8 hours.

UK Patent Application 1510790 describes a process for the removal of saponins from plant materials in the preparation of animal feed. The saponins are hydrolysed with acid before being neutralised by the addition of an alkali. The resulting mixture is then dried to form animal feed.

Japanese Patent Application 2008/272585 document describes processes for the removal of heavy metals and chlorinated organic compounds form soils. The process involves treating the soil with an acid, an alkaline and a photosensitizer along with and hydrogen peroxide as a reducing agent. The hydrogen peroxide reduces high valency metal ions (e.g. Cr(VI)).

Japanese Patent Application 2011/072917 describes a method for treating asbestos-containing waste material. The waste material is first treated with a mineral acid, then a solution containing a fluoride source and finally with an alkali.

Japanese Patent Application 2002/233858 describes a method for removing heavy metals from contaminated soil. The method includes adding iron/aluminium salts in an acidic solution to the contaminated soil and then adding a hydroxide to precipitate out the heavy metal ions.

It is an object of the present invention to provide an economic and improved process for the de-toxification of a range of contaminated materials, for example digestates, slurries, animal residues, human food wastes, municipal wastes, animal wastes and sewage, ashes derived from any of the above materials, furnace ashes and other calcined materials; the process producing a range of useful materials, for example agricultural fertiliser products or construction materials, rather than leading to disposal of these materials in either landfill or in a strictly limited way on non food cropped land.

It is an object of the present invention to provide an economic and improved process for the de-toxification of ranges of otherwise contaminated industrial furnace ashes, so that ashes treated by the process of the present invention can be used advantageously in the agricultural lime, fertiliser and growth promoter industries, rather than having to be disposed of into for example bunded landfill.

It is an object of the present invention to provide an economic process for the de-toxification of otherwise polluted digestates and slurries, derived from human food wastes, animal wastes and sewage. The treated digestates either in dilute or concentrated form can be used advantageously in the agricultural lime, fertiliser and growth promoter industries, without the danger previously posed by the organic pollutants present in un-treated digestates and slurries.

According to a first aspect of the present invention there is provided a process for the detoxification of contaminated material comprising industrial furnace ashes and digestates and preparation of a fertiliser therefrom, the process comprising:
(i) treating the contaminated material with an acidic composition;
(ii) treating the resultant mixture with an alkaline composition; and
(iii) granulating the mixture.

The contaminated material may further comprise any one or combination of mineral processing dusts, slurries, tanning-industry by-products, animal-derived material and plant-derived material. Suitable digestates may be anaerobic digestates.

The contaminated material may comprise material containing one or more toxic components as the contaminant of said contaminated material.

Suitable industrial furnace ashes may include:
1. Forest timber burning power station ashes;
2. Recovered timber burning power station ashes;
3. Bio-mass crop burning power station ashes;
4. Co-calcination (coal plus timber/bio-mass) power station ashes;
5. Wood burning furnace ashes;
6. Pulverised coal burning power station ashes;
7. Limed pulverised coal burning power station ashes;
8. Cement kiln ashes, fired with recovered, residual and waste derived fuels;
9. Lime and Magnesium Lime kiln ashes, fired with recovered, residual and waste derived fuels;
10. Food industry waste ashes;
11. Animal, avian and fish waste ashes;
12. Sewage sludge ashes;
13. Agricultural slurry ashes;
14. Incinerated urban (or municipal) waste ashes.
15. Calcined food industry waste ashes;
16. Calcined animal, avian and fish waste ashes;
17. Calcined sewage sludge ashes; and/or
18. Calcined agricultural slurry ashes.

The process may comprise de-toxifying a contaminated material. The process may comprise removing toxic contaminants from a contaminated material.

Further suitable industrial ashes may include ashes derived from the combustion of organic materials, for example:
a. Ashes from biomass combusting power stations;
b. Ashes from the combustion of sewage sludge;
c. Ashes from the combustion of municipal waste; and/or
d. Ashes from co-combustion.

Suitable mineral processing dusts include cement kiln dust, lime kiln dust and magnesium lime kiln dust.

There are known to be toxic entities present in industrial furnace ashes.

There are known to be toxic entities present in tanning-industry by-products, for example transition metal species. Chromium ions may be present in tanning-industry by-products.

The present invention may suitably provide a process for furnace ashes to be de-toxified.

Suitable digestates may include human food manufacturing industry derived digestates and concentrates thereof, for example:
a. General food factory wastes ;
b. General food residues;
c. Abattoir wastes;
d. Fish processing wastes; and/or
e. Poultry processing wastes.

Suitable digestates may include animal rearing industry derived digestates and concentrates thereof, for example:
a. Cow slurry;
b. Pig Slurry; and/or
c. Poultry detritus.

Suitable digestates may include sewage processing industry derived digestates and aerobically treated slurries and concentrates.

Suitable digestates may be anaerobic digestates. Suitable anaerobic digestates may be derived from the human food manufacturing industry, the animal rearing industry and the sewage processing industry as described above.

Suitable slurries may include animal rearing industry derived slurries, for example:
a. Cow slurry;
b. Pig Slurry; and/or
c. Poultry detritus.

Suitable slurries may include sewage processing industry derived slurries and concentrates.

The contaminated material may comprise one or more contaminants selected from halogenated cyclic compounds, steroids, hormones and transition metal species.

Suitably the contaminated material comprises halogenated cyclic compounds. Suitably the contaminated material comprises halogenated heterocyclic compounds. For example, polychlorinated dibenzofurans and dibenzodioxins. These are molecules of formula (I) or (II) below in which each X may independently be chlorine or hydrogen. Suitably the molecule contains at least 4 chlorine substituents.

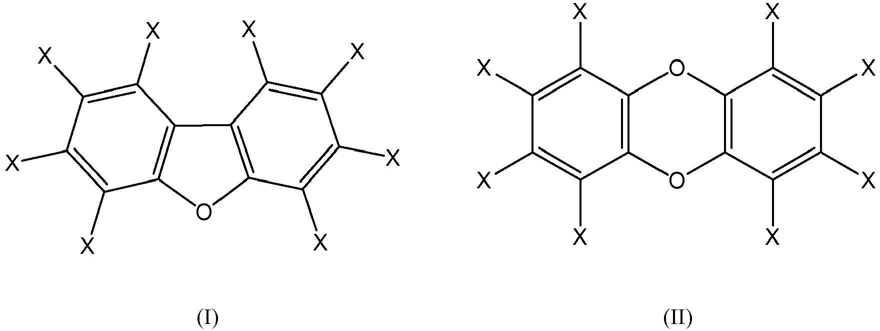

The contaminated material may comprise any one or combination of the compounds of formulas (I) or (II), for example:
Polychlorinated di benzo furans, for example:
   2378 Tetra Chloro Dibenzo Furan
   12378 Penta Chloro Dibenzo Furan
   23478 Penta Chloro Dibenzo Furan
   123478 Hexa Chloro Dibenzo Furan
   123678 Hexa Chloro Dibenzo Furan
   234678 Hexa Chloro Dibenzo Furan
   123789 Hexa Chloro Dibenzo Furan
   1234678 Hepta Chloro Dibenzo Furan
   1234789 Hepta Chloro Dibenzo Furan
   Octa Chloro Dibenzo Furan
Polychlorinated di benzo dioxins, for example:
   2378 Tetra Chloro Dibenzo Dioxin 12378 Penta Chloro Dibenzo Dioxin
   123478 Hexa Chloro Dibenzo Dioxin
   123678 Hexa Chloro Dibenzo Dioxin
   123789 Hexa Chloro Dibenzo Dioxin
   1234678 Hepta Chloro Dibenzo Dioxin
   Octa Chloro Dibenzo Dioxin

The contaminated material may comprise any one of more of:
Surfactants; Polychlorinated bi phenyls; UV filters; degradation products of UV filters; polycyclic aromatic hydrocarbons; fragrances; degradation products of fragrances; agricultural fungicides; Imazalil; Thiabendazole;
agricultural herbicides; Oxediazon;
agricultural insecticides; Propoxur;
phthalates; di(2-ethylhexyl) phthalate, hormones; degradation products of hormones; nonylphenol; industrial chemicals; detergent degradation products;
chlorinated paraffin's; eg C₁₀ to C₁₃ and C₁₄ to C₁₇, rubber and plastic products; perfluorinated alkyl substances; antibiotics; and degradation products of antibiotics.

Suitable transistion metal species include chromium ions and chromium comprising compounds. The contaminated material may comprise chromium in the hexavalent form.

Suitable preferred blends of contaminated materials may be prepared prior to treatment. These may be selected to provide advantageous properties.

Step (i) comprises treating the contaminated material with an acidic composition. Preferably treatment with the acidic composition provides a reducing environment. Step (i) may comprise treating the contaminated material with an acidic composition comprising a reducing agent.

After step (i) the resultant mixture is suitably left for a period of time prior to step (ii). This may allow reactions to occur which reduce the level of toxic molecules present in the contaminated material. For example reduction of metal species, such as transition metals may occur and organic heterocycles may be broken down or partially degraded.

The resultant mixture may be left for at least 10 seconds prior to step (ii), for example at least 20 seconds, suitably at least 30 seconds.

The resultant mixture may be left for up to 5 minutes prior to step (ii), for example up to 2 minutes, suitably up to 1 minute.

The resultant mixture may be left for between 10 and 60 seconds prior to step (ii).

Step (i) may be regarded as an acid reductive phase of a de-toxification reaction. Preferably step (i) involves the use of mineral and/or organic acids in combination with inorganic and/or organic reducing agents.

Examples of acids that can be used include sulphuric acid, phosphoric acid and simple organic acids present in or derived from organic waste streams such as digestates, or any combination thereof. The mineral acids may conveniently be added to the organic waste stream.

Examples of reducing agents that can be used include sulphites and organic reductants such as those found in digestates. Sulphites may conveniently be added to an organic waste stream.

As a further convenience a single acidic and reducing reagent can be made by blending mineral acids and sulphites into an organic waste stream such as a digestate.

It should be noted that such a combined acid and reducing agent may agronomically beneficiate the contaminated materials via the addition of nitrogen, phosphate and sulphur, at low additional cost.

Reagents may suitably be chosen on economic grounds and provide agronomic beneficiation to contaminated materials.

Step (ii) comprises treating the resultant mixture with an alkaline composition. Preferably this treatment provides an oxidising environment. Step (ii) may comprise treating the mixture with an alkaline composition comprising an oxidising agent.

In step (i) the contaminated material is suitably mixed with a liquid acidic composition. This suitably produces a slurry or wet cake. In step (ii) this slurry or wet cake is suitably treated with an alkaline composition. The alkaline composition is suitably provided as a solid, preferably in particulate form, suitably as a powder. This powder is preferably mixed with the slurry or wet cake. The product which forms may set or begin to set and may suitably be granulated or otherwise formed.

Step (ii) may be regarded as an alkaline oxidative phase of a de-toxification reaction. Preferably step (ii) involves the use of an alkaline powder in combination with an inorganic oxidising agent.

Reagents may suitably be chosen on economic grounds and provide agronomic beneficiation to the contaminated materials.

Examples of alkaline powders that can be used include burnt lime, that is calcium oxide and or burnt magnesium limestone, that is magnesium calcium oxide.

Examples of inorganic oxidising agents that can be used include salts of nitric acid, for example potassium nitrate. The nitrate salts may be used as a minor additive and may conveniently be pre-blended into the alkaline powder.

It should be noted that such a combined alkaline oxidative powder may agronomically beneficiate the contaminated materials via the addition of nitrogen, potassium, calcium and magnesium, at low additional cost.

The process of the present invention includes a step (iii) of granulating the mixture. Step (iii) of granulating the mixture may include rotary or cascade granulation. Step (iii) of granulating the mixture may include particle size selecting via selective sieving and back mixing.

The present invention may provide a process of reducing the amount of contaminants in a contaminated material.

Suitably the process reduces the amount of contaminants in the contaminated material to concentrations considered safe for application of the treated contaminated material onto agricultural land. Suitably the process may reduce the concentration of contaminants to less than 20 ppb, for example less than 5 ppb, suitably less than 2 ppb.

Suitably the process substantially de-toxifies the contaminated materials. In some embodiments the process de-toxifies the contaminated materials.

The process suitably comprises selecting and/or blending/batching contaminated materials so as to provide blends with agronomic value as either an agricultural fertiliser and/or a liming agent and/or a growth promoter.

The process suitably comprises treating these blended contaminated materials with a liquid acidic chemical reagent, which may be waste derived, that acidifies the blended contaminated materials and produces a chemically reductive condition in the resulting wet cake.

The process suitably comprises allowing time for the reaction of step (i), which is exothermic, to effect the reduction of transition metal oxides to lower valency states

The process suitably comprises allowing time for the reaction of step (i), which is exothermic, to initiate the breakdown of cyclic organic compounds to lower toxicity structures.

The process suitably comprises allowing time for the reaction of step (i), which is exothermic, to initiate the breakdown of heterocyclic organic compounds to lower toxicity structures for example sulphated aliphatic compounds.

The process suitably comprises treating the resulting chemically reduced cake with a fine powder blend of alkaline chemical reagents which may advantageously contain substances that may be waste derived and that have agronomic value either as agricultural fertiliser and/or liming agents and/or growth promoters.

The process suitably comprises allowing time for the reaction of step (ii) which is exothermic and binding, to effect the oxidation of residual heterocyclics to lower toxicity structures for example oxidised aliphatics.

The process suitably comprises granulating the setting cake produced in the reaction of step (ii) so as to provide a granular product of agronomic value, such as an agricultural fertiliser and/or a liming agent and/or a growth promoter.

In a preferred embodiment of this first aspect the process suitably comprises:
a) Batching/blending contaminated materials so as to provide blends with agronomic value as either an agricultural fertiliser and/or a liming agent and/or a growth promoter;
b) Treating these blended contaminated materials with a liquid acidic chemical reagent, which may be waste derived, that acidifies the blended contaminated materials and produces a chemically reductive condition in the resulting wet cake;
c) Allowing time for the reaction (b), which is exothermic, to effect the reduction of transition metal oxides to lower valency states and initiate the breakdown of heterocyclic organic compounds to lower toxicity structures for example sulphated aliphatic compounds;
d) Treating the resulting chemically reduced cake with a fine powder blend of alkaline chemical reagents which may advantageously contain substances that may be waste derived that have agronomic value either as agricultural fertiliser raw materials and/or agricultural liming agents and/or growth promoters;
e) Allowing time for reaction (d) which is exothermic and binding, to effect the oxidation of residual heterocyclics to lower toxicity structures for example oxidised aliphatics; and
f) Granulating the setting cake produced in reaction (d) so as to provide a granular product of agronomic value, such as an agricultural fertiliser and/or a liming agent and/or a growth promoter.

The present invention may provide a product or products with agronomic value that are economic to produce and economic in use in agronomics. The products may comprise:
a) Stable granulated ranges of agricultural, horticultural and arboricultural fertilisers and/or growth promoters wherein the agronomic nutrients are present in extended release formats that are less susceptible to nutrient loss by leaching into surface waters; and/or
b) Stable granulated ranges of agricultural, horticultural and arboricultural nutrified liming agents wherein the liming agent is accompanied by pH buffering substances which extend the alkalising effect of the liming agent; and/or
c) Stable granulated ranges of agricultural, horticultural and arboricultural lime containing fertilisers and/or growth promoters wherein the included lime obviates the need for separate periodic liming of the soil or growing medium; and/or
d) Stable granulated ranges of agricultural, horticultural and arboricultural fertilisers and/or growth promoters wherein other suitable materials can be incorporated or applied to enhance the existing components contained therein for example the addition of urease inhibitors such as N-(n-butyl) thiophosphoric triamide (NBPT), nitrification inhibitors like dicyandiamide to control unwanted nitrogen release from the composition.

The present invention may suitably provide a process for contaminated materials to be de-toxified.

The process of the present invention may be considered to provide a de-toxification reaction. The process of the invention preferably involves subjecting the contaminated materials to an acid alkaline pH cycle and a reduction oxidation REDOX cycle. This preferably has an effect on toxic cyclic compounds to provide destruction of the cyclic ring structure. This preferably has an effect on toxic heterocyclic compounds to provide destruction of the heterocyclic ring structure. This preferably has an effect on the hexavalent chromium to provide acidic reduction to the trivalent state.

In the present invention, various contaminated materials may conveniently be blended together, prior to treatment, so as to provide appropriate levels of agronomic nutrients in the granulated products. The following are examples of beneficial blends:
To provide phosphates in the finished product, ashes from:
   calcined food industry wastes, calcined animal, avian and fish waste, calcined sewage sludge, calcined agricultural slurries, may conveniently be used.
To provide potassium in the finished product, ashes or dusts derived from:
   wood ash or bio-mass burning power stations, co-calcination power stations and or cement kilns, may conveniently be used.

Additional nutrients may also be used to further beneficiate the contaminated materials.

Additional nutrients may be added, for example dissolved in a nitrogen and/or nitrogen providing digestate or ash so as to further beneficiate the finished product.

The use of a digestate in the present invention may provide some nitrogen at low cost. However, for many types of agricultural, horticultural and arboriculture fertilisers and/or growth promoters additional nitrogen may be needed in the granular products produced.

The use of materials containing sulphur such as sulphuric acid, sulphites etc in the detoxification process may add to the sulphur availability in the product which may be agronomically beneficial and is a plant secondary macronutrient. Similarly, it is also beneficial to use alkaline materials which contain magnesium and calcium as these are also plant secondary macronutrients.

Additional nitrogen may be provided for example by dissolving urea prills in the digestate prior to its use in the process.

Similarly, if needed additional phosphates and potassics may be added, either dissolved in the digestate or as a powder blended into the alkaline oxidative powder mix.

The process of de-toxification of contaminated materials as defined in the present invention may be used to convert toxic wastes that would otherwise have to be placed in bunded landfill at considerable cost, into agronomically advantageous and economical agricultural nutrients and liming products, or combinations thereof, with considerable market value.

The economics of the processes as defined in the present invention may be aided by the fact that all reagents used in the de-toxification process may become fertilisers and/or liming agents and/or growth promoters and/or nutrient sources in the granulated finished product.

The product of the process of the present invention may be an extended nutrient release format. The product may consequently lose less nutrients to leaching than known fertilisers and/or growth promoters and therefore more nutrients may be taken up by the crops. This may provide more value to the farmer than known fertilisers.

Taken together we believe the above advantages constitute a significant improvement in terms of the application of contaminated material in agronomic usage.

The first aspect may comprise any feature as described in relation to the second or third aspect.

Also disclosed is a process for the treatment of industrial furnace ashes, the process comprising:
(i) treating the ashes with an acidic composition; and
(ii) treating the resultant mixture with an alkaline composition.

Suitable preferred blends of ashes may be prepared prior to treatment. These may be selected to provide advantageous properties.

Step (i) comprises treating the ashes with an acidic composition. Preferably treatment with the acidic composition provides a reducing environment. Step (i) may comprise treating the ashes with an acidic composition comprising a reducing agent.

After step (i) the resultant mixture is suitably left for a period of time prior to step (ii). This may allow reactions to occur which reduce the level of toxic molecules present in the ash. For example reduction of metal species, such as transition metals may occur and organic heterocycles may be broken down or partially degraded.

Step (ii) comprises treating the mixture with an alkaline composition. Preferably this treatment provides an oxidising environment. Step (ii) may comprise treating the mixture with an alkaline composition comprising an oxidising agent.

In step (i) the furnace ashes are suitably mixed with a liquid acidic composition. This suitably produces a slurry or wet cake. In step (ii) this slurry or wet cake is treated with an alkaline composition. The alkaline composition is suitably provided as a solid, preferably in particulate form, suitably as a powder. This powder is preferably mixed with the slurry or wet cake. The product which forms may set or begin to set and can suitably be granulated.

In some embodiments the method includes a step (iii) of granulating the mixture.

Also described is a process for the de-toxification of industrial furnace ashes, the process comprising:
a) Batching furnace ash arisings so as to provide blends with agronomic value as either an agricultural fertiliser or liming agent, or both;
b) Treating these blended ashes with a liquid acidic chemical reagent, which may also be waste derived, that acidifies the blended ash and produces a chemically reductive condition in the resulting wet cake;
c) Allowing time for the reaction (b), which is exothermic, to effect the reduction of transition metal oxides to lower valency states and initiate the breakdown of heterocycle organics to lower toxicity structures for example sulphated aliphatics;
d) Treating the resulting chemically reduced cake with a fine powder blend of alkaline chemical reagents which may advantageously contain substances that may be waste derived that have agronomic value either as agricultural fertiliser raw materials or agricultural liming agents or both;
e) Allowing time for reaction (d) which is exothermic and binding, to effect the oxidation of residual heterocyclics to lower toxicity structures for example oxidised aliphatics; and
f) Granulating the setting cake produced in reaction (d) so as to provide a granular product of agronomic value, such as an agricultural fertiliser or agricultural liming agent, or both.

Also described is a product or products with agronomic value that are economic to produce and economic in use in agronomics. The products may comprise:
a) Stable granulated ranges of agricultural, horticultural and arboricultural fertilisers wherein the agronomic nutrients are present in extended release formats that are less susceptible to nutrient loss by leaching into surface waters.
b) Stable granulated ranges of agricultural, horticultural and arboricultural nutrifed liming agents wherein the liming agent is accompanied by pH buffering substances which extend the alkalising effect of the liming agent.
c) Stable granulated ranges of agricultural, horticultural and arboricultural lime containing fertilisers wherein the included lime obviates the need for separate periodic liming of the soil or growing medium.

Also described is a method for furnace ashes to be de-toxified.

The following are examples of furnace ashes with which the inventors have experimented and de-toxified via the methods described:
1. Forest timber burning power station ashes.
2. Recovered timber burning power station ashes.
3. Bio-mass crop burning power station ashes.
4. Co-calcination (coal plus timber/bio-mass) power station ashes.
5. Wood burning furnace ashes.
6. Pulverised coal burning power station ashes.
7. Limed pulverised coal burning power station ashes.
8. Cement kiln ashes, fired with recovered, residual and waste derived fuels.
9. Lime and Magnesium Lime kiln ashes, fired with recovered, residual and waste derived fuels.
10. Calcined food industry waste ashes.
11. Calcined animal, avian and fish waste ashes.
12. Calcined sewage sludge ashes.
13. Calcined agricultural slurry ashes.
14. Incinerated urban waste ashes.

There are known to be toxic entities present in industrial furnace ashes.

Some particular classes of harmful molecules which may be present in furnace ashes are poly chlorinated dibenzofurans and dibenzodioxins. These are molecules of formula (I) or (II) below in which each X may independently be chlorine or hydrogen. Suitably the molecule contains at least 4 chlorine substituents.

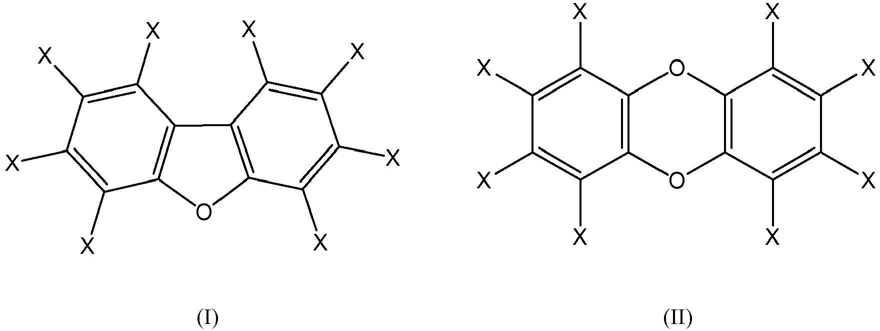

The following heterocyclic organic compounds may be found in industrial furnace ashes, for example in those listed above:
2378 Tetra Chloro Dibenzo Furan
12378 Penta Chloro Dibenzo Furan
23478 Penta Chloro Dibenzo Furan
123478 Hexa Chloro Dibenzo Furan
123678 Hexa Chloro Dibenzo Furan
234678 Hexa Chloro Dibenzo Furan
123789 Hexa Chloro Dibenzo Furan
1234678 Hepta Chloro Dibenzo Furan
1234789 Hepta Chloro Dibenzo Furan
Octa Chloro Dibenzo Furan
2378 Tetra Chloro Dibenzo Dioxin
12378 Penta Chloro Dibenzo Dioxin
123478 Hexa Chloro Dibenzo Dioxin
123678 Hexa Chloro Dibenzo Dioxin
123789 Hexa Chloro Dibenzo Dioxin
1234678 Hepta Chloro Dibenzo Dioxin
Octa Chloro Dibenzo Dioxin

Additionally, chromium in the hexavalent form may be found in the industrial furnace ashes listed above.

The methods described herein may be considered to provide a de-toxification reaction. The methods preferably involves subjecting the industrial furnace ash to an acid alkaline pH cycle and a reduction oxidation REDOX cycle. This preferably has an effect on toxic heterocyclics compounds to provide destruction of the heterocyclic ring structure. This preferably has an effect on the hexavalent chromium to provide acidic reduction to the trivalent state.

Step (i) may be regarded as an acid reductive phase of a de-toxification reaction. Preferably step (i) involves the use of mineral and/or organic acids in combination with inorganic and/or organic reducing agents.

Reagents may suitably be chosen on economic grounds and provide agronomic beneficiation to industrial furnace ashes.

Examples of acids that can be used include sulphuric acid, phosphoric acid and simple organic acids present in or derived from organic waste streams such as anaerobic digestates. The mineral acids may conveniently be added to the organic waste stream.

Examples of reducing agents that can be used include sulphites and organic reductants such as those found in anaerobic digestates. Sulphites may conveniently be added to an organic waste stream.

As a further convenience a single acidic and reducing reagent can be made by blending mineral acids and sulphites into an organic waste stream such as an anaerobic digestate.

It should be noted that such a combined acid and reducing agent may agronomically beneficiate the industrial furnace ashes via the addition of nitrogen, phosphate and sulphure, at low additional cost.

Step (ii) may be regarded as an alkaline oxidative phase of a de-toxification reaction. Preferably step (ii) involves the use of an alkaline powder in combination with an inorganic oxidising agent.

Reagents may suitably be chosen on economic grounds and provide agronomic beneficiation to industrial furnace ashes.

Examples of alkaline powders that can be used include burnt lime, that is calcium oxide and or burnt magnesium limestone, that is magnesium calcium oxide.

Examples of inorganic oxidising agents that can be used include salts of nitric acid, for example potassium nitrate. The nitrate salts may be used as a minor additive and may conveniently be pre-blended into the alkaline powder.

It should be noted that such a combined alkaline oxidative powder may agronomically beneficiate the industrial furnace ashes via the addition of nitrogen, potassium, calcium and magnesium, at low additional cost.

In the methods described herein, various industrial furnace ashes may conveniently be blended together, prior to treatment, so as to provide appropriate levels of agronomic nutrients in the granulated products. The following are examples of beneficial blends:
To provide phosphates in the finished product, ashes from:
   Calcined food industry wastes, Calcined animal, avian and fish waste, Calcined sewage sludge, Calcined agricultural slurries, may conveniently be used.
To provide potassium in the finished product, ashes derived from:
   Wood ash or Bio-mass burning power stations, co-calcination power stations and or Cement kilns, may conveniently be used.

Additional nutrients may also be used to further beneficiate Industrial Furnace Ashes

Additional nutrients may be added, for example dissolved in the nitrogen providing anaerobic digestate so as to further beneficiate the finished product.

It should be noted that the use of anaerobic digestate, in the present invention, does provide some nitrogen at low cost. However, for many types of agricultural, horticultural and arboriculture fertilisers additional nitrogen is usually needed in the granular products produced.

Additional nitrogen may be provided for example by dissolving urea prills in the anaerobic digestate prior to its use in the process.

Similarly, if needed additional phosphates and potassics can be added either dissolved in the anaerobic digestate or as a powder blended into the alkaline oxidative powder mix.

The process of de-toxification of industrial furnace ashes as defined herein may be used to convert toxic wastes that that would otherwise have to be placed in bunded landfill at considerable cost, into agronomically advantageous and economical agricultural nutrients and liming products, or combinations thereof, with considerable market value.

It should be noted that the economics of the processes as defined in the present invention are aided by the fact that all reagents used in the de-toxification process become fertilisers and or liming agent nutrient sources in the granulated finished product.

It should further be noted that the value to the farmer of the finished product of the present invention is an extended nutrient release format and as such the agronomic products will lose less nutrients to leaching and more nutrients will be taken up by the crops.

Taken together we believe the above advantages constitute a significant improvement in terms of the application of industrial furnace ashes in agronomic usage.

Also disclosed is a method of treating anaerobic digestates and slurries, the method comprising the steps of:
(i) providing a mixture of anaerobic digestates and slurries;
(ii) contacting the mixture with an acidic composition to provide a reductive environment;
(iii) contacting the mixture with an alkaline composition to provide an oxidising environment; and
(iv) granulating the product thereby obtained.

The present invention may provide a product obtained by the method of the first aspect.

This product may be used as a fertiliser and/or a liming agent.

Step (i) of the method of the third aspect comprises providing a mixture of anaerobic digestates and slurries. Components of the mixture may be selected to provide desired properties of the final product.

Examples of the digestates and slurries which may be treated by the method of the present invention include.
1. Human food manufacturing industry derived anaerobic digestates and concentrates thereof, e.g.:
   Food factory wastes generally.
   Abattoir wastes.
   Fish processing wastes.
2. Animal rearing industry derived anaerobic digestates and concentrates thereof, eg:
   Cow slurry.
   Pig slurry.
   Poultry detritus.
3. Sewage processing industry derived anaerobic digestates and aerobically treated slurries and concentrates thereof.

The methods described herein may be regarded as a detoxification method, that is a method of reducing the presence of toxic compounds in the anaerobic digestates and slurries.

The following groupings of Organic Pollutants may be found in the digestates and slurries treated by the method of the present invention:
Polychlorinated di benzo furans; 10 specific molecular structures, some ex surfactants.
Polychlorinated di benzo dioxins; 7 specific molecular structures.
Polychlorinated bi phenyls; 12 specific molecular structures, some ex UV filters.
Polycyclic aromatic hydrocarbons; 20 specific molecular structures, some ex Fragrances.
Agricultural fungicides; more than 10 specifics notably Imazalil and Thiabendazole.
Agricultural herbicides; more than 10 specifics notably Oxediazon.
Agricultural insecticides; more than 10 specifics notably Propoxur.
Phthalates; eg di (2 ethylhexyl) phthalate, some ex Hormones.
Nonylphenol; ex industrial chemicals and detergent degradation products.
Chlorinated paraffins; eg C₁₀ to C₁₃ and C₁₄ to C₁₇, some ex rubber and plastic products.
Perfluorinated alkyl substances; some ex Antibiotics.

In the methods described herein the digestates and slurries, which are suitably provided in arising or concentrate form, may be subjected to an acid alkaline pH cycle and a reduction oxidation REDOX cycle. The resulting effect on the organic pollutants is suitably degradation of the polycyclic or heterocyclic molecular structures. The result of these degradation reactions is a range of sulphated aliphatic ring fragments.

Step (ii) suitably comprises contacting the mixture with an acidic composition comprising a reducing agent. This composition may compromise mineral and/or organic acids in combination with inorganic and/or organic reducing agents.

The reagents are preferably chosen on economic grounds which provide agronomic beneficiation to the finished product fertiliser.

Examples of acids that can be used include sulphuric acid, phosphoric acid and simple organic acids present in or derived from organic waste streams such as anaerobic digestates. The mineral acids may conveniently be added to the organic waste stream.

Examples of reducing agents that can be used include sulphites and organic reductants as found in anaerobic digestates. The sulphites may conveniently be added to the organic waste stream.

As a further convenience a single composition comprising acidic and reducing reagent can be made by blending mineral acids and sulphites into an organic waste stream such as an anaerobic digestate.

It should be noted that such a combined acid and reducing agent agronomically beneficiates the finished product fertiliser via the addition of phosphate and sulphur, at low additional cost.

Following step (ii) the mixture may be left for a period of time and optionally stirred or otherwise agitated to allow reduction of heterocyclic organic compounds. These may be converted to a compounds of lower toxicity, for example sulphated aliphatic compounds.

Step (iii) suitably comprises contacting the mixture with an alkaline composition comprising an oxidising agent.

This composition may comprise an alkaline powder in combination with an inorganic oxidising agent.

The reagents are preferably chosen on economic grounds which provide agronomic beneficiation to the finished product fertiliser.

Examples of alkaline powders that can be used include burnt lime, that is calcium oxide and or burnt magnesium limestone, that is magnesium calcium oxide. Alternatively some industrial furnace ashes, that contain calcium and or magnesium oxides, can be used.

Examples of inorganic oxidising agents that can be used include salts of nitric acid, for example potassium nitrate. The nitrate salts which are only a minor additive may conveniently be pre-blended into the alkaline powder.

It should be noted that such a combined alkaline oxidative powder agronomically beneficiates the finished product fertiliser via the addition of nitrogen, potassium, calcium and magnesium, 1at low additional cost.

Following step (iii) the mixture is suitably left for a period of time, with optional stirring or otherwise agitating to allow for oxidation of residual heterocyclic compounds into compounds of lower toxicity for example oxidised aliphatic compounds. After step (iii) the mixture may be in the form of a wet cake. As this begins to set it may be granulated to form a granular product, for example a fertiliser or liming agent.

Also described is a process for the de-toxification of anaerobic digestates and slurries, the process comprising:
a) Batching the digestate arisings so as to provide blends with agronomic value as either an agricultural fertiliser or liming agent, or both.
b) Treating these blended digestate with a liquid acidic chemical reagent, which may also be waste derived, that acidifies the blended digestate and produces a chemically reductive condition in the resulting wet cake.
c) Allowing time for the reaction (b), which is exothermic, to initiate the breakdown of heterocyclic organics to lower toxicity structures for example sulphated fully reduced aliphatics.
d) Treating the resulting chemically reduced cake with a fine powder blend of alkaline chemical reagents which may advantageously contain substances that may be waste derived that have agronomic value either as agricultural fertiliser raw materials or agricultural liming agents or both.
e) Allowing time for reaction (d) which is exothermic and binding, to effect the oxidation of residual heterocyclics to lower toxicity structures for example oxidised aliphatics.
f) Granulating the setting cake produced in reaction (d) so as to provide a granular product of agronomic value, such as an agricultural fertiliser or agricultural liming agent, or both.

Also described is a product or products with agronomic value that are economic to produce and economic in use in agronomics, for example:
a) Stable granulated ranges of agricultural, horticultural and arboricultural fertilisers wherein the agronomic nutrients are present in extended release formats that are less susceptible to nutrient loss by leaching into surface waters.
b) Stable granulated ranges of agricultural, horticultural and arboricultural nutrified liming agents wherein the liming agent is accompanied by pH buffering substances which extend the alkalising effect of the liming agent.
c) Stable granulated ranges of agricultural, horticultural and arboricultural lime containing fertilisers wherein the included lime obviates the need for separate periodic liming of the soil or growing medium.

In some embodiments additional nutrients may be added, for example dissolved in the nitrogen/phosphate providing anaerobic digestate so as to further beneficiate the finished product.

It should be noted that the use of anaerobic digestate, in the present invention, does provide some nitrogen and phosphate at low cost. However, for many types of agricultural, horticultural and arboriculture fertilisers additional nitrogen is usually needed in the granular products produced.

Additional nitrogen may be provided for example by dissolving urea prills in the anaerobic digestate prior to its use in the de-toxification process.

Similarly, if needed additional phosphates and potassics can be added either dissolved in the anaerobic digestate or as a powder blended into the alkaline oxidative powder mix.

For example phosphatic industrial furnace ashes and potassic power station wood ash may be added to the powder blend.

Also described is a product obtained by the methods described above.

The product may be used as a fertiliser and/or liming agent and/or growth promoter.

The suitable features of the product may be as described in relation to the methods described above.

Also disclosed is the use of a product obtained by the methods described above as a fertiliser.

Also described is the use of a product obtained by the methods described above as a liming agent.

Also disclosed is the use of a product obtained by the methods described above as a fertiliser and liming agent.

Also disclosed is the use of a product obtained by the methods described above as a growth promoter.

Also disclosed is the use of a product obtained by the methods described above in a construction material. Suitable construction materials which the product may be used in include grouts, concrete, blocks, aggregates and light weight aggregates. Suitable uses of the product in construction material include block making, highway construction, unbound applications and land remediation.

The invention will now be further described with reference to the following non-limiting examples.

### Example 1

By way of an initial example a nutrified lime granular agronomic product suitable for amenity horticultural application may conveniently be made from the following industrial furnace ashes with anaerobic digestate plus additional nutrients:
1. Anaerobic digestate plus added urea 100Kg per tonne.
2. Sulphuric acid, dilute waste recovered grade 100Kg per tonne.
3. Calcined animal waste ash 100Kg per tonne.
4. Power station wood ash plus Cement Kiln Dust 600Kg per tonne.
5. Burnt lime with added potassium nitrate 100Kg per tonne.

The resulting granular agronomic nutrient was in the form of an Autumn/Winter dressing for eg golf courses, with an analysis of:
1% Nitrogen; 2% Phosphate; 3% Potash plus 15% Lime Neutralisation Value.

### Example 2

An example of a bona fide granular agricultural fertiliser product suitable for sustainable farming applications may conveniently be made from the following industrial ashes with anaerobic digestate plus additional nutrients:
1. Anaerobic digestate plus abattoir residues 176Kg per tonne.
2. Prilled urea dissolved in digestate 168Kg per tonne.
3. Sulphuric and phosphoric acid blend 44Kg per tonne.
4. Calcined animal waste ash 68Kg per tonne.
5. Potassium nitrate sulphate blend 50Kg per tonne.
6. Power station wood ash plus Cement Kiln Dust 394Kg per tonne.
7. Burn lime/Maglime blend 100Kg per tonne.

The resulting granular agronomic fertiliser was in the form of a half-strength 20:10:10 mimic with an analysis of:
10% Nitrogen; 5% Phosphate; 5% Potash plus 15% Lime Neutralisation Value.

### Example 3

Following treatment by the method of the present invention significant reduction in heterocyclics and hexavalent chromium have been recorded in furnace ash. Specifically a blend of recovered timber power station ash plus cement kiln dusts formulated as a 1:2:3 Autumn/Winter dressing analysed as follows:
1a. Initial ash blend contained 16.387 nano grams per gram of listed furans and dioxins.
1b. Finished granular agronomic product contained 0.706 nano grams per gram of listed furans and dioxins.

It should be noted that this indicated that 95% of the total furans and dioxins had been destroyed by the de-toxification process as defined in the present invention.
2a. Initial deliberately contaminated ash blends with 1g Sodium dichromate 1Kg ash.
2b. Finished granular agronomic product contained less than 1 micro gram per Kg of hexavalent chromium.

It should be noted that the detection limits of hexavalent chromium in the test used was not exceeded by this deliberately contaminated sample after the de-toxification process as defined in the present invention.

This implies that virtually all the hexavalent chromium has been reduced to the trivalent state.

### Example 4

Via the de-toxification approach defined in the present invention significant reduction in all the organic pollutants listed herein have been recorded. By way of an example the Furans and Dioxins present in a typical Anaerobic Digestate were reduced as follows in the production of the Autumn/Winter dressing fertiliser:-

Initial digestate contained 25.275 nano grams per gram of listed furans and dioxins. The finished granular agronomic product contained 0.915 nano grams per gram of listed furans and dioxins.

It should be noted that this indicated that 96.4% of the total furans and dioxins had been destroyed by the de-toxification process as defined in the present invention. The process of de-toxification of digestates and slurries as defined in the present invention can be claimed to convert toxic wastes, that would otherwise be deleterious to cropped soils, into agronomically advantageous and economical agricultural nutrients and liming products or combinations thereof, with considerable market value.

It should be noted that the economics of the processes as defined in the present invention are aided by the fact that all reagents used in the de-toxification process become fertilisers and or liming agent nutrient sources in the granulated finished product. It should further be noted that the value to the farmer of the finished product of the present invention is an extended nutrient release format and as such the agronomic products will lose less nutrients to leaching and more nutrients will be taken up by the crops.

Taken together we believe the above advantages constitute a significant improvement in terms of the usage of digestates, slurries and ashes in agronomic applications.

### Example 5

Via the de-toxification approach defined in the present invention significant reduction in level of chromium(VI) has been recorded. Specifically a blend of recovered timber power station ash plus cement kiln dusts formulated as a 1:2:3 Autumn/Winter dressing analysed as follows:
1. Initial deliberately contaminated ash blends with 1g sodium dichromate 1Kg ash.
2. Finished granular agronomic product contained less than 1 micro gram per Kg of hexavalent chromium, which was the limit of detection.

It will be appreciated that preferred embodiments of the invention may provide a process by which a range of contaminated materials such as those produced by industrial or agricultural processes, for example furnace ashes, digestates from agricultural and municipal wastes and other residues, may be de-toxified and concomitantly thermally set to yield materials suitable for use as agronomic nutrients such as liming agents, fertilisers and growth promoters, and suitable for use as construction materials. The process of the present invention and the products obtained thereby may provide significant advantages in terms of additional safety compared with un-processed materials to produce commercially useful products for agriculture and useful feedstock materials for the construction industry. The process of the present invention and the products obtained thereby may provide materials with agronomic advantages.

These contaminated materials may contain toxic and carcinogenic substances such as halogenated heterocyclics and higher oxidation state transition metal species such as chromium which is a known carcinogen.

## Claims

1. A process for the detoxification of contaminated material comprising industrial furnace ashes and digestates and preparation of a fertiliser therefrom, the process comprising:
(i) treating the contaminated material with an acidic composition;
(ii) treating the resultant mixture with an alkaline composition; and
(iii) granulating the mixture.

2. The process according to claim 1 wherein step (i) comprises treating the contaminated material with an acidic composition comprising a reducing agent.

3. The process according to claim 1 or 2 wherein the acidic composition is a liquid composition.

4. The process according to any preceding claim wherein the acidic composition comprises an acid selected from one or more of sulphuric acid, phosphoric acid and organic acids.

5. The process according to any preceding claim wherein step (ii) comprises treating the resultant mixture with an alkaline composition comprising an oxidising agent.

6. The process according to any preceding claim wherein the alkaline composition is in the form of a powder.

7. The process according to any preceding claim wherein step (ii) involves treating the mixture with a composition comprising an alkaline powder and an inorganic oxidising agent.

8. The process according to any preceding claim wherein the digestates are anaerobic digestates.

9. The process according to claim 8 wherein the anaerobic digestates are derived from the human food manufacturing industry, the animal rearing industry or the sewage processing industry.

10. The process according to claim 8 wherein the anaerobic digestates are derived from the sewage processing industry.

11. The process according to any of claims 1 to 10, wherein the contaminated material comprises a mixture of anaerobic digestates and slurries, wherein the acidic composition provides a reductive environment, and wherein the alkaline composition provides an oxidising environment.

12. The process according to any preceding claim wherein the contaminated material comprises one or more contaminants selected from halogenated cyclic compounds, steroids, hormones and transition metal species.

13. The process according to any preceding claim wherein the contaminated material comprises chromium in the hexavalent form.

14. A product produced by the process of any of claims 1 to 13.

15. Use of a product obtained by the process of any of claims 1 to 13 as a fertiliser.

## Patentansprüche

1. Verfahren für die Entgiftung von kontaminiertem Material, das Industrieofenasche und Gärrückstände umfasst, und Herstellung eines Düngemittels daraus, wobei das Verfahren Folgendes umfasst:
(i) Behandeln des kontaminierten Materials mit einer sauren Zusammensetzung;
(ii) Behandeln des resultierenden Gemischs mit einer alkalischen Zusammensetzung; und
(iii) Granulieren des Gemischs.

2. Verfahren nach Anspruch 1, wobei Schritt (i) das Behandeln des kontaminierten Materials mit einer sauren Zusammensetzung, die ein Reduktionsmittel umfasst, umfasst.

3. Verfahren nach Anspruch 1 oder 2, wobei die saure Zusammensetzung eine flüssige Zusammensetzung ist.

4. Verfahren nach einem vorhergehenden Anspruch, wobei die saure Zusammensetzung eine Säure umfasst, die aus einem oder mehreren von Schwefelsäure, Phosphorsäure und organischen Säuren ausgewählt ist.

5. Verfahren nach einem vorhergehenden Anspruch, wobei Schritt (ii) das Behandeln des resultierenden Gemischs mit einer alkalischen Zusammensetzung, die ein Oxidationsmittel umfasst, umfasst.

6. Verfahren nach einem vorhergehenden Anspruch, wobei die alkalische Zusammensetzung in der Form eines Pulvers ist.

7. Verfahren nach einem vorhergehenden Anspruch, wobei Schritt (ii) das Behandeln des Gemischs mit einer Zusammensetzung, die ein alkalisches Pulver und ein anorganisches Oxidationsmittel umfasst, umfasst.

8. Verfahren nach einem vorhergehenden Anspruch, wobei die Gärrückstände anaerobe Gärrückstände sind.

9. Verfahren nach Anspruch 8, wobei die anaeroben Gärrückstände aus der Fertigungsindustrie für menschliche Nahrung, der Tierzuchtindustrie oder der Abwasserverarbeitungsindustrie stammen.

10. Verfahren nach Anspruch 8, wobei die anaeroben Gärrückstände aus der Abwasserverarbeitungsindustrie stammen.

11. Verfahren nach einem der Ansprüche 1 bis 10, wobei das kontaminierte Material ein Gemisch aus anaeroben Gärrückständen und Schlacken umfasst, wobei die saure Zusammensetzung eine reduktive Umgebung bereitstellt, und wobei die alkalische Zusammensetzung eine oxidierende Umgebung bereitstellt.

12. Verfahren nach einem vorhergehenden Anspruch, wobei das kontaminierte Material einen oder mehrere Kontaminanten umfasst, die aus halogenierten zyklischen Verbindungen, Steroiden, Hormonen und Übergangsmetallspezien ausgewählt sind.

13. Verfahren nach einem vorhergehenden Anspruch, wobei das kontaminierte Material Chrom in der hexavalenten Form umfasst.

14. Produkt, hergestellt durch das Verfahren nach einem der Ansprüche 1 bis 13.

15. Verwendung eines durch das Verfahren nach einem der Ansprüche 1 bis 13 erhaltenen Produkts als ein Düngemittel.

## Revendications

1. Procédé de détoxification de matières contaminées, comprenant des cendres et digestats de fours industriels, et de préparation d'un engrais à base de ces derniers, le procédé comprenant :
(i) le traitement des matières contaminées à l'aide d'une composition acide ;
(ii) le traitement du mélange résultant à l'aide d'une composition alcaline ; et
(iii) la granulation du mélange.

2. Procédé selon la revendication 1, l'étape (i) comprenant le traitement des matières contaminées à l'aide d'une composition acide comprenant un agent réducteur.

3. Procédé selon la revendication 1 ou 2, la composition acide étant une composition liquide.

4. Procédé selon une quelconque des revendications précédentes, la composition acide comprenant un acide sélectionné parmi un ou plusieurs des suivants : acide sulfurique, acide phosphorique, et acides organiques.

5. Procédé selon une quelconque des revendications précédentes, l'étape (ii) comprenant le traitement du mélange résultant avec une composition alcaline comprenant un oxydant.

6. Procédé selon une quelconque des revendications précédentes, la composition alcaline se présentant sous forme de poudre.

7. Procédé selon une quelconque des revendications précédentes, l'étape (ii) comprenant le traitement du mélange avec une composition comprenant une poudre alcaline et un oxydant inorganique.

8. Procédé selon une quelconque des revendications précédentes, les digestats étant des digestats anaérobie.

9. Procédé selon la revendication 8, les digestats anaérobie étant dérivés du secteur de la fabrication d'aliments pour l'homme, du secteur de l'élevage, ou du secteur du traitement des eaux usées.

10. Procédé selon la revendication 8, les digestats anaérobie étant dérivés du secteur des eaux usées.

11. Procédé selon une quelconque des revendications 1 à 10, les matières contaminées comprenant un mélange de digestats anaérobie et de boues, la composition acide fournissant un milieu réducteur, et la composition alcaline fournissant un milieu oxydant.

12. Procédé selon une quelconque des revendications précédentes, les matières contaminées comprenant un ou plusieurs contaminants sélectionnés parmi les suivants : composés cycliques halogénés, stéroïdes, hormones et espèces de métaux de transition.

13. Procédé selon une quelconque des revendications précédentes, les matières contaminées comprenant du chrome sous sa forme hexavalente.

14. Produit réalisé par le procédé selon une quelconque des revendications 1 à 13.

15. Produit obtenu par le procédé selon une quelconque des revendications 1 à 13 en tant qu'engrais.
